# EUROPÄISCHE PATENTSCHRIFT

(11) **EP 4 200 543 B1**
(45) Veröffentlichungstag und Bekanntmachung des Hinweises auf die Patenterteilung: **08.05.2024**
(21) Anmeldenummer: 21759071.0
(22) Anmeldetag: 12.08.2021
(51) Int. Cl.: F16H 57/04

(54) **PLANETENGETRIEBE MIT VERBESSERTER SCHMIERSTOFFÜBERGABE, ANTRIEBSSTRANG, WINDKRAFTANLAGE UND INDUSTRIE-APPLIKATION**
PLANETARY TRANSMISSION WITH IMPROVED LUBRICANT TRANSFER, DRIVE TRAIN, WIND TURBINE AND INDUSTRIAL INSTALLATION
TRAIN ÉPICYCLOÏDAL À DISTRIBUTION AMÉLIORÉE DU LUBRIFIANT, CHAINE CINÉMATIQUE, ÉOLIENNE ET APPLICATION INDUSTRIELLE

(30) Priorität: 24.08.2020 EP 20192317
(43) Veröffentlichungstag der Anmeldung: 28.06.2023
(73) Patentinhaber: Flender GmbH, 46395 Bocholt (DE)
(72) Erfinder: HESSLING, Pascal, 46395 Bocholt (DE); VENNEMANN, Michael, 48703 Stadtlohn (DE)
(74) Vertreter: Michalski Hüttermann & Partner Patentanwälte mbB
(86) Internationale Anmeldenummer: PCT/EP2021/072493
(87) Internationale Veröffentlichungsnummer: WO 2022/043080

(56) Entgegenhaltungen:
- WO-A1-2012/055832
- US-A1- 2017 307 064
- US-B2- 10 337 602

## Beschreibung

Die Erfindung betrifft ein Planetengetriebe mit einer verbesserten Schmierstoffübergabe und einen Antriebsstrang, der mit einem derartigen Planetengetriebe ausgestattet ist. Die Erfindung betrifft ebenso eine Windkraftanlage, die über einen solchen Antriebsstrang verfügt und eine Industrie-Applikation mit einem erfindungsgemäßen Planetengetriebe. Gleichermaßen betrifft die Erfindung ein Computerprogrammprodukt zum Simulieren eines Betriebsverhaltens eines derartigen Planetengetriebes.

Aus der Patentschrift EP 3 001 071 B1 ist ein Planetengetriebe bekannt, das eine Planetenstufe umfasst, die mit Schmierstoff versorgt wird. Zwischen einer Gleitbuchse, die mit einer Gehäusewandung verbunden ist, und einer Wange eines Planetenträgers ist ein Schmiermittel-Verteilungskanal ausgebildet.

Aus WO 2012/055832 A1 und US 10 337 602 B2 ist jeweils ein Planetengetriebe mit einem durch drehende Komponenten verschiedener Planetenstufen hindurchgeführten Schmierstoffkanal bekannt, wobei zwischen zwei relativ zueinander drehenden Komponenten eine Schmierstoffübergabevorrichtung mit einer eine Abgabekomponente und einer relativ drehbaren Aufnahmekomponente vorgesehen ist, wobei der Schmierstoffkanal und die zugehörige Schmierstoffübergabevorrichtung in einem Axialbereich zwischen den Sonnenrädern der einander nachfolgenden Planetenstufen ausgebildet ist.

An Planetengetriebe werden steigende Anforderungen an die Leistungsfähigkeit und Kompaktheit gestellt. Unerlässlich ist dafür ein zuverlässiger und verlustarmer Transport von Schmierstoff zu den entsprechenden Komponenten des Getriebes. Gleichzeitig wird eine einfache Herstellung solcher Planetengetriebe angestrebt. Der Erfindung liegt die Aufgabenstellung zugrunde, ein Planetengetriebe bereitzustellen, das eine Schmierstoffversorgung aufweist, die in zumindest einer der beschriebenen Punkte eine Verbesserung bietet.

Die Aufgabenstellung wird durch ein Planetengetriebe mit den Merkmalen des Anspruchs 1 gelöst. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Das Planetengetriebe weist eine erste und eine zweite Planetenstufe auf. Die erste und zweite Planetenstufe sind drehmomentübertragend miteinander verbunden und benachbart zueinander angeordnet. Die erste und zweite Planetenstufe weisen jeweils als Komponenten ein Hohlrad, einen Planetenträger mit drehbaren Planetenrädern und ein Sonnenrad auf. Zumindest eine dieser Komponenten ist jeweils in der ersten und zweiten Planetenstufe als drehende Komponente ausgebildet, die im Betrieb des Planetengetriebes rotiert. Das Planetengetriebe umfasst auch eine Schmierstoffübergabevorrichtung, die zwischen der ersten und zweiten Planetenstufe angeordnet ist. Die Schmierstoffübergabevorrichtung ist zu einer Übergabe eines Schmierstoffs von der zweiten Planetenstufe an die erste Planetenstufe ausgebildet. Dazu umfasst die Schmierstoffübergabevorrichtung eine Abgabekomponente, durch die der Schmierstoff an eine Aufnahmekomponente transportierbar ist. Die Abgabekomponente und die Aufnahmekomponente sind hierzu komplementär zueinander ausgebildet. Die Abgabekomponente ist mitdrehend an einer Komponente der zweiten Planetenstufe angeordnet. Die Abgabekomponente ist drehfest mit einer drehenden Komponente der zweiten Planetenstufe verbunden und folgt dementsprechend der vorliegenden Drehbewegung im Betrieb des Planetengetriebes. Die Abgabekomponente ist dadurch kompakt ausbildbar und erlaubt gleichzeitig eine leckagearme Übertragung von Schmierstoff von der zweiten auf die erste Planetenstufe. Die erste Planetenstufe ist folglich aus der zweiten Planetenstufe heraus mit Schmierstoff versorgbar, wodurch Bohrungen in Gehäusewandungen für Schmierstoffkanäle entbehrlich sind. Insbesondere sind zusätzliche Schmierstoffzuführungen von außen an die erste Planetenstufe entbehrlich und/oder Bohrungen, durch die die drehenden Komponenten der zweiten Planetenstufe umgangen werden. Ferner kann das Planetengetriebe als sequentielles Planetengetriebe oder als Planetengetriebe mit Leistungsverzweigung zwischen den Planetenstufen ausgebildet sein.

Zudem ist die Aufnahmekomponente mitdrehend an einer Komponente der ersten Planetenstufe angeordnet. Die Aufnahmekomponente dient zum Aufnehmen des von der Abgabekomponente abgegeben Schmierstoffs und ist drehfest mit der Komponente der ersten Planetenstufe verbunden, die eine drehende Komponente ist. Die Aufnahmevorrichtung folgt dementsprechend einer Drehbewegung in der ersten Planetenstufe. Ferner können die Aufnahmekomponente und die Abgabekomponente bezogen auf eine Hauptdrehachse des Planetengetriebes im Betrieb des Planetengetriebes zueinander eine Relativdrehung aufweisen. Die Relativdrehung zwischen der Abgabekomponente und der Aufnahmekomponente ist dabei relativ gering, so dass für einen leckagearmen Betrieb auch einfache Dichtungen eine hinreichende Dichtwirkung bieten. Die Schmierstoffübergabevorrichtung ist folglich in einfacher Weise mit verfügbaren und erprobten Dichtungen herstellbar. Darüber hinaus können die Abgabekomponente und die Aufnahmekomponente reduzierte Abmessungen aufweisen und so platzsparend ausgebildet sein und kosteneffizient hergestellt werden.

Außerdem weist das Planetengetriebe einen mit der Schmierstoffübergabevorrichtung kommunizierenden Schmierstoffkanal auf. Hierbei ist vorgesehen, der Schmierstoffkanal über die gesamte axiale Erstreckung eines Zahneingriffsbereichs eines Sonnenrads der ersten Planetenstufe radial innerhalb einer Verzahnung des Sonnenrads mit mindestens einem Planetenrad der ersten Planetenstufe verläuft. Anstatt eines im Wesentlichen radial verlaufenden Schmierstoffkanals, der in unterschiedliche axiale Richtungen zu der jeweils zu schmierenden Komponente, insbesondere Planetenradbolzen und/oder an den jeweiligen Planetenradbolzen vorgesehene Planetenräder, abgehende Teilkanäle aufweist, kann sich der Schmierstoffkanal im Wesentlichen über einen Großteil der axialen Erstreckung der ersten Planetenradstufe erstrecken. Hierbei wird die Erkenntnis ausgenutzt, dass bei einem mehrstufigen Planetengetriebe die jeweils nachfolgende Planetenstufe über eine axiale Relativbewegung an die jeweils vorhergehende Planetenstufe angesetzt wird und hierbei gegebenenfalls teilweise in die vorhergehende Planetenstufe, beispielsweise mit einer langen Nabe des Planetenträgers der nachfolgende Planetenstufe, die eine Sonnenwelle der vorhergehende Planetenstufe ausbilden kann, eingesetzt wird. Dadurch ist ein eher scheibenartiger Hauptbereich, insbesondere eine Wange, des jeweiligen Planetenträgers an der von der nachfolgenden Planetenstufe weg weisenden Axialseite vorgesehen, während dieser Planetenträger an der zur nachfolgenden Planetenstufe weisenden Axialseite in der Regel einen größere Zentralöffnung aufweist, in welche die nachfolgende Planetenstufe und geeignete Lager bei der Montage leichter eingesetzt werden können. Durch den sich über die gesamte axiale Erstreckung des Zahneingriffsbereichs des Sonnenrads der ersten Planetenstufe erstreckenden Schmierstoffkanal, kann der Schmierstoffkanal von dem scheibenartigen Hauptbereich des Planetenträgers der nachfolgenden Planetenstufe zum scheibenartigen Hauptbereich des Planetenträgers der vorhergehenden Planetenstufe geführt werden. Insbesondere kann der Schmierstoffkanal mehrere in Reihe geschaltete Planetenstufen miteinander verbinden, indem der Schmierstoffkanal von dem scheibenartigen Hauptbereich des Planetenträgers der nachfolgenden Planetenstufe über eine Nabe dieses Planetenträgers zu einem scheibenartigen Hauptbereich des Planetenträgers der vorhergehenden Planetenstufe und immer so weiter geführt werden kann. Eine Schmierung sämtlicher Planetenträder eines mehrere Planetenstufen aufweisenden Planetengetriebes kann dadurch bei einem geringen konstruktiven Aufwand, insbesondere auf Basis eines Baukastenprinzip für die verschiedenen Planetenstufen, kostengünstig und verlässlich erreicht werden. Vorzugsweise kann an dem Übergang des Schmierstoffkanals zwischen den jeweiligen Planetenstufen jeweils die Schmierstoffübergabevorrichtung vorgesehen sein, die zwischen dem jeweiligen Paar an Planetenstufen vorzugsweise gleichartig und/oder ähnlich, beispielsweise als proportional vergrößerte oder verkleinerte Version, und besonders bevorzugt identisch ausgestaltet ist. Die Herstellungskosten können dadurch weiter reduziert werden.

Der Schmierstoffkanal kann beispielsweise aus einem, insbesondere radial innerhalb eingesteckten, Pitchrohr mit Schmierstoff versorgt werden. Das Pitchrohr beziehungsweise ein von dem Pitchrohr begrenzter Ringspalt wird hierbei nicht als Teil des Schmierstoffkanals verstanden. Bei dem Schmierstoffkanal handelt es sich eher um spanabhebend, insbesondere durch Bohren, hergestellte und miteinander kommunizierende Teilstücke, die in dem Material der jeweiligen drehenden Komponente der jeweiligen Planetenstufe eingebracht sind, wobei die Schmierstoffübergabevorrichtung ebenfalls einen Teil des Schmierstoffkanals ausbildet. Der Schmierstoffkanal ist insbesondere ausschließlich in dem Material lastabtragender drehender Komponenten der verschiedenen Planetenstufen zuzüglich der Schmierstoffübergabevorrichtung ausgebildet. Eine Überbrückung des axialen Abstands des Planetenrads der ersten Planetenstufe erfolgt also über eine, insbesondere lastabtragende, drehende Komponente der ersten Planetenstufe oder der zweiten Planetenstufe und nicht über ein in der Regel feststehendes Pitchrohr. Eine axiale Erstreckung eines Pitchrohrs kann dadurch reduziert und/oder minimiert werden.

Der Schmierstoffkanal kann in oder an einer Komponente der zweiten Planetenstufe ausgebildet sein, der sich axial durch einen Zahneingriffsbereich der ersten Planetenstufe erstreckt. Der Zahneingriffsbereich ist dabei ein axialer Abschnitt der ersten Planetenstufe sein, in dem ein Planetenrad mit einem Sonnenrad und/oder einem Hohlrad der ersten Planetenstufe kämmt. Der Schmierstoffkanal kann folglich in Axialrichtung am Zahneingriffsbereich vorbei verlaufen. Dies erlaubt es, in einem radial inneren Bereich des Planetengetriebes im Bereich um die Hauptdrehachse Bauraum zu nutzen. Der so freigehaltene Bauraum ist als lichter Raum in einfacher Weise zugänglich. Radial weiter innenliegende Schmierstoffkanäle oder Schmierstofftransportvorrichtungen sind entbehrlich. Dadurch wiederum können die Planetenräder einen erhöhten Durchmesser aufweisen, bzw. das Sonnenrad einen verringerten Durchmesser. Hierdurch ergibt sich für die Durchmesserverhältnisse in der jeweiligen Planetenstufe mehr konstruktive Freiheit, so dass eine breitere Spanne an Standübersetzungen in der entsprechenden Planetenstufe erzielbar ist. Das beanspruchte Planetengetriebe erlaubt somit beispielsweise, in der ersten Planetenstufe eine erhöhte Standübersetzung zu erzielen. Infolgedessen kann die zweite Planetenstufe kleiner, kompakter und gewichtssparender ausgelegt werden. Das beanspruchte Planetengetriebe bietet daher eine gesteigerte massenspezifische Leistungsdichte. Ein Schmierstoffkanal, der an der Komponente der zweiten Planetenstufe angebracht ist, kann beispielsweise als Rohrleitung oder Ringkanal ausgebildet sein. Eine Rohrleitung vermeidet die Herstellung einer langen Bohrung. Je länger eine Bohrung ist, umso schwieriger ist eine präzise Herstellung.

Insbesondere ist der Schmierstoffkanal innerhalb der Schmierstoffübergabevorrichtung in Fließrichtung zwischen einer axialen Fließrichtung und einer radialen Fließrichtung umgelenkt, wobei insbesondere der Schmierstoffkanal in axialer Richtung in die Abgabekomponente einmündet und in radialer Richtung aus der Aufnahmekomponente austritt. Dies ermöglicht es entweder in der Abgabekomponente oder in der Aufnahmekomponente oder an den relativ zueinander bewegbaren und auf einander zu gerichteten Kontaktflächen der Abgabekomponente und der Aufnahmekomponente eine, insbesondere im Wesentlichen 90° betragende, Umlenkung kostengünstig auszubilden. Sich kreuzende und an einer Seite verstopfte Bohrungen für die Umlenkung des Schmierstoffkanals sind vermieden. Stattdessen ist es möglich ein ansonsten durch einen Stopfen zu verstopfendes Ende einer Bohrung des Schmierstoffkanals durch die Schmierstoffübergabevorrichtung zu ersetzen und einen Stopfen einzusparen. Vorzugsweise ist der Schmierstoffkanal ausschließlich durch unverstopfte Durchgangsbohrungen, Sacklochbohrungen und die mindestens eine Schmierstoffübergabevorrichtung ausgebildet.

Vorzugsweise ist das Sonnenrad an einer Nabe eines Planetenträgers der zweiten Planetenstufe relativ drehbar oder drehfest vorgesehen, wobei der Schmierstoffkanal innerhalb der Nabe den Zahneingriffsbereichs des Sonnenrads passiert und die Schmierstoffübergabevorrichtung stromabwärts der Nabe positioniert ist. Der Schmierstoffkanal braucht dadurch nicht durch das in axialer Richtung kürzere Sonnenrad hindurchgeführt werden. Stattdessen ist der Schmierstoffkanal durch die im Vergleich zur axialen Erstreckung des Sonnenrads deutlich längeren Nabe des Planetenträgers der nachfolgenden Planetenstufe hindurchgeführt. Der Schmierstoffkanal kann zu dem Sonnenrad beabstandet innerhalb des jeweiligen Planetenträgers der vorherigen, insbesondere ersten, Planetenstufe und der nachfolgenden, insbesondere zweiten, Planetenstufen in radialer Richtung verlaufen. Da die Nabe der Planetenträgers der zweiten Planetenstufe eine drehende Komponente der zweiten Planetenstufe darstellt, die zudem in die erste Planetenstufe innerhalb einer drehenden Komponente der ersten Planetenstufe eingesteckt sein kann, ist die Schmierstoffübergabevorrichtung insbesondere stromabwärts des von der zweiten Planetenstufe zur ersten Planetenstufe strömenden Schmierstoff des Schmierstoffkanals vorgesehen. Die Schmierstoffübergabevorrichtung kann dadurch bauraumsparend mitten innerhalb der vorherigen, insbesondere ersten, Planetenstufe positioniert sein.

Es ist aber auch möglich, dass das Sonnenrad mit einer Sonnenradwelle der ersten Planetenstufe drehfest befestigt ist, wobei der Schmierstoffkanal innerhalb der Sonnenradwelle den Zahneingriffsbereichs des Sonnenrads passiert und die Schmierstoffübergabevorrichtung stromaufwärts der Sonnenradwelle positioniert ist. Der Schmierstoffkanal braucht dadurch nicht durch das in axialer Richtung kürzere Sonnenrad hindurchgeführt werden. Stattdessen ist der Schmierstoffkanal durch die im Vergleich zur axialen Erstreckung des Sonnenrads deutlich längeren Sonnenradwelle der vorhergehenden Planetenstufe hindurchgeführt. Der Schmierstoffkanal kann zu dem Sonnenrad beabstandet innerhalb des jeweiligen Planetenträgers der vorherigen, insbesondere ersten, Planetenstufe und der nachfolgenden, insbesondere zweiten, Planetenstufen in radialer Richtung verlaufen und über die Sonnenradwelle miteinander verbunden sein. Da die Sonnenradwelle der ersten Planetenstufe eine drehende Komponente der ersten Planetenstufe darstellt, die zudem in die zweite Planetenstufe innerhalb einer drehenden Komponente der zweiten Planetenstufe eingesteckt sein kann, ist die Schmierstoffübergabevorrichtung insbesondere stromaufwärts des von der zweiten Planetenstufe zur ersten Planetenstufe strömenden Schmierstoff des Schmierstoffkanals vorgesehen. Die Schmierstoffübergabevorrichtung kann dadurch bauraumsparend mitten innerhalb der nachfolgenden, insbesondere zweiten, Planetenstufe positioniert sein.

Besonders bevorzugt ist der Schmierstoffkanal sowohl an einen im einem Planetenträger drehbar oder drehfest eingesetzten Planetenradbolzen der ersten Planetenstufe als auch an einen im einem Planetenträger drehbar oder drehfest eingesetzten Planetenradbolzen der zweiten Planetenstufe herangeführt. Insbesondere ist vorgesehen, dass der Schmierstoffkanal zu einem an dem Planetenradbolzen der ersten Planetenstufe vorgesehenen Planetenrad der ersten Planetenstufe an dem Planetenradbolzen der ersten Planetenstufe axial beabstandet endet und/oder der Schmierstoffkanal zu einem an dem Planetenradbolzen der zweiten Planetenstufe vorgesehenen Planetenrad der zweiten Planetenstufe an dem Planetenradbolzen der zweiten Planetenstufe axial beabstandet endet. Der innerhalb der scheibenartigen Wange des jeweiligen Planetenradträgers verlaufende Schmierstoffkanal kann in axialer Richtung an dem jeweiligen Planetenradbolzen enden, ohne dass der Schmierstoffkanal innerhalb des Planetenträgers auf das Planetenrad zu umgelenkt werden muss. Der Planetenradbolzen kann mit einem entsprechenden Spiel in dem Planetenträger aufgenommen sein, so dass durch die elastische Verformung des Planetenradbolzens im laufenden Betrieb der Schmierstoff von dem Schmierstoffkanal an dem Planetenradbolzen entlang zu dem an dem Planetenradbolzen, insbesondere relativ drehbar gelagerten, Planetenrad gefördert werden kann. Insbesondere weist der Planetenradbolzen in axialer Richtung verlaufende Rillen, Nuten oder Ähnliches auf, so dass der aus dem Schmierstoffkanal austretende Schmierstoff außerhalb des Planetenträgers an dem Planetenradbolzen entlang leicht und mit einem ausreichenden Massenstrom an das zugehörige Planetenrad gefördert werden kann.

Darüber hinaus kann die Schmierstoffübergabevorrichtung in Axialrichtung, also entlang der Hauptdrehachse des Planetengetriebes, auf einer der zweiten Planetenstufe abgewandten Seite eines Planetenrads der ersten Planetenstufe angeordnet sein. Der Schmierstoff ist dadurch über eine erhöhte Distanz in einer Komponente der zweiten Planetenstufe transportierbar, was wiederum eine im Wesentlichen leckagefreien Transport des Schmierstoffs gewährleistet. Ferner ist der Schmierstoff in der ersten Planetenstufe lediglich über eine reduzierte axiale Strecke zu transportieren. Die führt zu einer baulichen Vereinfachung in der ersten und zweiten Planetenstufe. Des Weiteren erlaubt eine solche Positionierung der Schmierstoffübergabevorrichtung eine einfache Zugänglichkeit von der ersten Planetenstufe aus, wodurch wiederum die Montage- und Wartungsfreundlichkeit des beanspruchten Planetengetriebes gesteigert wird.

Ferner kann die Abgabekomponente an einem der ersten Planetenstufe zugewandten Ende einer Nabe eines Planetenträgers der zweiten Planetenstufe angeordnet sein. An einer solchen Nabe, die auch als lange Nabe bezeichnet wird, kann ein Sonnenrad der ersten Planetenstufe angeordnet sein. Insbesondere kann die Abgabevorrichtung an einer Stirnfläche der Nabe angebracht sein, die der ersten Planetenstufe zugewandt ist, wodurch die Zugänglichkeit der Schmierstoffübergabevorrichtung verbessert wird. Dadurch wird eine erhöhte Montage- und Wartungsfreundlichkeit erzielt. Die Abgabevorrichtung kann dabei hydraulisch mit einem Schmierstoffkanal verbunden sein, der im Wesentlichen als Bohrung in Axialrichtung durch die Nabe ausgebildet ist. Eine solche Bohrung ist in einfacher Weise herstellbar, beispielsweise durch einen einzigen Bohrvorgang oder durch eine Gussform des Planetenträgers. Alternativ oder ergänzend kann der Schmierstoffkanal auch als Rohrleitung ausgebildet sein. Der Schmierstoffkanal kann in einem radial inneren Bereich der Nabe ausgebildet sein, der im Betrieb des Planetengetriebes einer geringeren mechanischen Beanspruchung unterworfen ist als ein radial äußerer Bereich. Dadurch kann ein Bauraum, der bei Getriebestufen gemäß dem Stand der Technik nicht nutzbar ist, technisch genutzt werden. Hierdurch wird eine verbesserte Ausnutzung des existierenden Bauraums erzielt, wodurch wiederum das beanspruchte Planetengetriebe kompakt ausbildbar ist. Insbesondere kann die Abgabekomponente einstückig mit der Nabe des Planetenträgers der zweiten Planetenstufe ausgebildet sein.

In einer weiteren Ausführungsform des beanspruchten Planetenträgers kann die Aufnahmekomponente an einer der zweiten Planetenstufe abgewandten Wange eines Planetenträgers der ersten Planetenstufe angeordnet sein, also im Bereich der bezeichneten Wange. Im Bereich der Wange des Planetenträgers der ersten Planetenstufe, die der zweiten Planetenstufe abgewandt ist, liegt auch ein Bolzenauge für einen Planetenradbolzen, auf dem ein Planetenrad der ersten Planetenstufe drehbar angeordnet ist. Die Wange erstreckt sich im Wesentlichen, bezogen auf die Hauptdrehachse, in Radialrichtung. Der von der Aufnahmekomponente aufgenommene Schmierstoff kann daher durch einen Schmierstoffkanal in Radialrichtung durch die Wange zu einem der Planetenradbolzen geleitet werden. Der Schmierstoffkanal in Radialrichtung wiederum ist in einfacher Weise herstellbar, beispielsweise durch eine einzige Bohrung oder durch eine Gussform des Planetenträgers der ersten Planetenstufe. Die bezeichnete Wange des Planetenträgers der ersten Planetenstufe ist ferner in einfacher Weise zugänglich, was eine Wartung vereinfacht. Insbesondere können so Dichtungen, die zwischen der Aufnahmekomponente und der Abgabekomponente eine Dichtwirkung hervorrufen, mit reduziertem Aufwand ausgetauscht werden. Dies erlaubt es, in kosteneffizienter Weise über die gesamte Lebensdauer des Planetengetriebes eine wirksame Dichtwirkung in der Schmierstoffübergabevorrichtung zu gewährleisten. Ebenso können radiale und axiale Versätze zwischen der ersten und zweiten Planetenstufe leckagearm ausgeglichen werden. Darüber hinaus wirken keine hohen bewegten Massen bei einer Montage auf die Dichtungen ein, wodurch Beschädigungen der Dichtungen vorgebeugt wird. Ferner können die Abgabekomponente und die Aufnahmekomponente relativ kompakt und leicht ausgebildet werden, was eine präzise Montage von Hand erlaubt. Die dabei auftretenden Montagekräfte sind relativ gering, so dass Beschädigungen der Dichtungen bei der Montage vermieden werden können. Dies wiederum ermöglicht es beispielsweise, eine Dichtung einzusetzen, die aus mechanisch empfindlichen Werkstoffen hergestellt ist, wie beispielsweise Polytetrafluorethylen. Analog zur Montagefreundlichkeit wird so auch die Wartungsfreundlichkeit gesteigert bzw. eine Wartung erst ermöglicht.

Des Weiteren kann im beanspruchten Planetengetriebe die Schmierstoffübergabevorrichtung zum Ausgleichen eines radialen, eines axialen Versatzes und/oder Winkelversatzes zwischen der Abgabekomponente und der Aufnahmekomponente ausgebildet sein. Die Begriffe axial und radial sind dabei auf die Hauptdrehachse des Planetengetriebes bezogen. Ein Winkelversatz kann durch ein Verkippen der entsprechenden Komponenten hervorgerufen werden. Insbesondere wird ein Leckageverlust an der Schmierstoffübergabevorrichtung vermieden oder verringert, wenn zwischen den Komponenten der ersten und zweiten Planetenstufe an denen die Aufnahmevorrichtung bzw. die Abgabevorrichtung angebracht sind, ein radialer Versatz, ein axialer Versatz und/oder ein Winkelversatz auftritt. Das beanspruchte Planetengetriebe erlaubt es somit beispielsweise, den Planetenträger der ersten und/oder zweiten Planetenstufe in beweglicher Weise zu lagern. Hierdurch können Zwangskräfte an den Planetenträgern und der Verzahnung vermieden werden. Das beanspruchte Planetengetriebe ist folglich für eine breite Spanne an Einsatzfällen anpassbar, ist robust gegen widrige Betriebsbedingungen und bietet reduzierte Leckageverluste.

Beim beanspruchten Planetengetriebe kann die Schmierstoffübergabevorrichtung eine elastisch berührende Dichtung, eine Labyrinthdichtung, eine Spaltdichtung, eine Buchse und/oder einen Dichtring aufweisen. Eine elastische berührende Dichtung, wie beispielsweise ein Wellendichtring oder eine Dichtung nach dem Prinzip eines Kolbendichtrings, bietet bei Drehung und bei Stillstand eine gute Dichtwirkung und ist in einer Vielzahl an Größen und Formen verfügbar. Eine Labyrinthdichtung bietet eine im Wesentlichen kontaktfreie Dichtung, so dass mechanische Verluste an der Schmierstoffübergabevorrichtung im Betrieb vermieden werden. Eine Buchse, die beispielsweise aus Bronze oder einem anderen Weichmetall hergestellt sein. Spaltdichtungen bieten ebenfalls eine gute Dichtwirkung. Die Verwendung von Spaltdichtungen wird durch die kompakte Bauweise des beanspruchten Planetengetriebes ermöglicht. Insbesondere sind die Leckageverluste, die bei einer Spaltdichtung auftreten, im beanspruchten Planetengetriebe auf ein praxistaugliches Maß reduziert. Mit einer Buchse ist in der Schmierstoffübergabevorrichtung in kompakter und kosteneffizienter Weise eine gute Dichtwirkung erzielbar. Durch Auswahl eines geeigneten Werkstoffs ist eine ausreichende Lebensdauer für die Buchse erzielbar. Ein Dichtring, der beispielsweise als O-Ring ausgebildet sein kann, bietet eine gute Dichtwirkung und ist kosteneffizient austauschbar. Auch eine Kombination unterschiedlicher Dichtung kann im beanspruchten Planetengetriebe an der Schmierstoffübergabevorrichtung angeordnet sein. Damit ist die Dichtung in einfacher Weise an die vorliegenden Betriebserfordernisse anpassbar, so dass die beanspruchte Lösung auf Planetengetriebe unterschiedlicher Größenordnungen und mit unterschiedlichen Konstruktionskonzepten übertragbar ist.

In einer weiteren Ausführungsform des beanspruchten Planetengetriebes kann zwischen der Abgabekomponente und der Aufnahmekomponente ein Spalt ausgebildet sein. Der Spalt erlaubt es, die Relativdrehung zwischen der Abgabekomponente und der Aufnahmekomponente kontaktfrei, also reibungsfrei, erfolgen zu lassen. Gleichzeitig ist der Leckageverlaust durch den Spalt präzise auslegbar, so dass dieser in einem hinnehmbaren Umfang haltbar ist. Ferner erlaubt der Spalt zwischen der Aufnahmekomponente und der Abgabekomponente eine leichtgängige Montage.

Alternativ oder ergänzend kann zwischen der Abgabekomponente und der Aufnahmekomponente eine Fliehkraftdichtung angeordnet sein. Die Fliehkraftdichtung kann im Stillstand kontaktbehaftet geöffnet und oberhalb einer Auslegungsdrehzahl kontaktbehaftet abdichtend ausgebildet sein. Da im Stillstand des Planetengetriebes auch die Schmierstoffförderung unterbleibt, kann ohne Weiteres eine geöffnete, also nicht dichtend wirkende Fliehkraftdichtung hingenommen werden. Durch eine steigende Drehzahl des Planetengetriebes wird auch die Schmierstoffförderung gesteigert. Dementsprechend wirkt die Fliehkraftdichtung umso stärker dichtend, je höher die Drehzahl des Planetengetriebes ist, und damit die Anforderungen an die Fliehkraftdichtung. Dadurch wird eine selbsttätig regulierende Dichtung verwirklicht.

Ferner kann das beanspruchte Planetengetriebe auch zumindest eine dritte Planetenstufe aufweisen, die der zweiten Planetenstufe nachgeschaltet angeordnet ist. Zwischen der zweiten und dritten Planetenstufe kann korrespondierend zur ersten und zweiten Planetenstufe auch eine Schmierstoffübergabevorrichtung angeordnet sein, durch die Schmierstoffe von der dritten in die zweite Planetenstufe übertragbar ist. Die Schmierstoffübergabevorrichtung zwischen der zweiten und dritten Planetenstufe kann dabei nach zumindest einer der oben skizzierten Ausführungsformen ausgebildet sein. Darüber hinaus können die beiden Schmierstoffübergabevorrichtungen baugleich ausgebildet sein oder unterschiedliche Ausführungsformen verwirklichen. Das beanspruchte Planetengetriebe weist so eine einfache und leistungsfähige Schmierstoffversorgung auf. Insgesamt wird die vorhandene Länge von Schmierstoffkanälen im Planetengetriebe minimiert. Dadurch werden Druckverluste im Schmierstoff, also hydraulische Verluste, reduziert. Dies erlaubt es, mit einer einfachen Schmierstoffversorgung, insbesondere einer Schmierstoffpumpe mit relativ geringer Förderleistung, für ein komplexes Planetengetriebe mit drei oder mehr Planetenstufen die Schmierstoffversorgung zu gewährleisten. Dadurch wiederum sind mindestens dreistufige Planetengetriebe in einfacher und wirtschaftlicher Weise herstellbar. Derartige dreistufige Planetengetriebe sind beispielsweise aus der Internationalen Anmeldung WO 2020/001942 A1 bekannt. Der Offenbarungsgehalt von WO 2020/001942 A1 wird durch Verweisung in die vorliegende Anmeldung mit einbezogen. Des Weiteren kann im beanspruchten Planetengetriebe eine Sonnenwelle der dritten Planetenstufe einen reduzierten Innendurchmesser aufweisen. Infolgedessen ist auch ein Außendurchmesser der dritten Planetenstufe reduziert.

Die zugrundeliegende Aufgabenstellung wird ebenfalls durch einen erfindungsgemäßen Antriebsstrang gelöst, der zur Verwendung in einer Windkraftanlage geeignet ist. Der Antriebsstrang umfasst eine Rotorwelle, die drehmomentübertragend mit einem Getriebe verbunden ist. Ebenso umfasst der Antriebsstrang einen Generator, der drehmomentübertragend mit dem Getriebe verbunden ist. Erfindungsgemäß ist das Getriebe als Planetengetriebe gemäß einer der oben skizzierten Ausführungsformen ausgebildet. Darüber hinaus können das Planetengetriebe und der Generator auch ineinander integriert ausgebildet sein, also als ein Generatorgetriebe ausgebildet sein. Durch das erfindungsgemäße Planetengetriebe wird auch die Montage des erfindungsgemäßen Antriebsstrangs weiter vereinfacht und beschleunigt.

Gleichermaßen wird die eingangs beschriebene Aufgabe durch eine erfindungsgemäße Windkraftanlage gelöst. Die Windkraftanlage umfasst eine Gondel, an der drehbar ein Mehrblattrotor angeordnet ist. Der Mehrblattrotor ist drehmomentübertragend mit einer Rotorwelle verbunden, die zu einem Antriebsstrang der Windkraftanlage gehört. Der Antriebsstrang ist erfindungsgemäß gemäß einer der oben skizzierten Ausführungsformen ausgebildet.

Ebenso wird die Aufgabenstellung durch eine erfindungsgemäße Industrie-Applikation gelöst. Die Industrie-Applikation umfasst eine Antriebseinheit, die beispielweise als Elektromotor, Verbrennungsmotor oder Hydraulikmotor ausgebildet sein kann. Die Antriebseinheit stellt eine Antriebsleistung zur Verfügung, die einem Getriebe zugeführt wird. Dazu ist die Antriebseinheit drehmomentübertragend mit dem Getriebe verbunden. Das Getriebe wiederum ist drehmomentübertragend mit einer Abtriebseinheit verbunden, der die Antriebsleistung unter veränderter Drehzahl und unter Berücksichtigung von mechanischen Verlusten zur Verfügung gestellt wird. Die Abtriebseinheit kann dabei als mechanische Anwendung ausgebildet sein, so dass die Industrie-Applikation insgesamt beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Erfindungsgemäß ist das Getriebe als ein Planetengetriebe ausgebildet, das gemäß einer der oben dargestellten Ausführungsformen ausgebildet ist.

Ferner wird die oben beschriebene Aufgabe durch ein nicht beanspruchtes Computerprogrammprodukt gelöst, das zu einem Simulieren eines Betriebsverhaltens eines Planetengetriebes ausgebildet ist, das in einer Windkraftanlage angeordnet, also im Wesentlichen eingebaut, ist. Dazu kann das Computerprogrammprodukt ein Physik-Modell aufweisen, in dem ein Abbild des Planetengetriebes darstellbar ist. Das Physik-Modell kann Simulationsroutinen aufweisen, durch die eine Kinematik des Planetengetriebes und/oder seiner Komponenten abbildbar ist. Ebenso kann das Physik-Modell dazu geeignet sein, ein fluiddynamisches Verhalten eines Betriebsstoffs, wie beispielsweise Schmierstoff, nachzubilden. Gleichermaßen kann das Physik-Modell dazu ausgebildet sein, ein thermisches Verhalten des Planetengetriebes, seiner Komponenten, des Betriebsstoffs einzeln oder in gegenseitiger Wechselwirkung zu simulieren. Ferner kann das Physik-Modell dazu geeignet sein, basierend auf den baulichen Abmessungen der Komponenten des Planetengetriebes und Daten über deren jeweilige Materialien ein Schwingungsverhalten der Komponenten zu simulieren. Das Computerprogrammprodukt kann eine Datenschnittstelle zum Empfangen von Daten umfassen, durch die eine vorliegende Betriebssituation des Planetengetriebes vorgegeben wird. Ebenso kann das Computerprogrammprodukt über eine Datenschnittstelle zum Ausgeben von Simulationsresultaten aufweisen, die an einen Benutzer auszugeben sind und/oder an andere simulationsgerichtete Computerprogrammprodukte weiterzuleiten sind. Das Computerprogrammprodukt kann als sogenannter Digitaler Zwilling bzw. Digital Twin ausgebildet sein. Derartige Digitale Zwillinge sind beispielsweise in der Offenlegungsschrift US 2017/286572 A1 näher beschrieben. Der Offenbarungsgehalt von US 2017/286572 A1 wird durch Verweisung in die vorliegende Anmeldung mit einbezogen. Das Planetengetriebe, dessen Betriebsverhalten durch das Computerprogrammprodukt simulierbar ist, ist nach einer der oben skizzierten Ausführungsformen ausgebildet. Das beanspruchte Planetengetriebe kann dadurch in eine Vielzahl an Windkraftanlagen angepasst werden. Insbesondere können so eine Montage oder eine Wartung des Planetengetriebes simuliert werden, um so die technischen Vorzüge des beanspruchten Planetengetriebes in der Windkraftanlage maximal ausschöpfen zu können.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Ausführungsform des beanspruchten Planetengetriebes im Längsschnitt;
- FIG 2: eine geschnittene Schrägansicht einer Ausführungsform der beanspruchten Windkraftanlage;
- FIG 3: schematisch den Aufbau einer Ausführungsform der beanspruchten Industrie-Applikation.

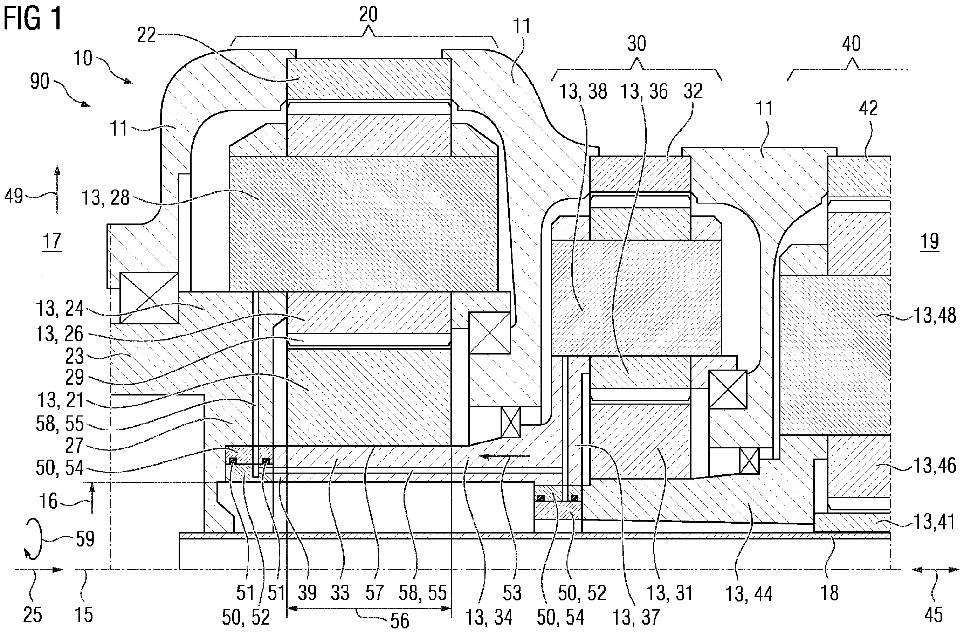

In FIG 1 ist schematisch eine beanspruchte Ausführungsform des beanspruchten Planetengetriebes 10 im Längsschnitt dargestellt. Das Planetengetriebe 10 umfasst eine erste Planetenstufe 20, der eine zweite Planetenstufe 30 und eine dritte Planetenstufe 40 nachgeschaltet sind. Die Planetenstufen 20, 30, 40 sind durch Gehäusekomponenten 11 miteinander verbunden, die lösbar mit den Hohlrädern 22, 32, 42 der jeweiligen Planetenstufen 20, 30, 40 verbunden sind. Die erste, zweite und dritte Planetenstufe 20, 30, 40 weisen jeweils einen Planetenträger 24, 34, 44 auf, an denen jeweils mehrere Planetenradbolzen 28, 38, 48 befestigt sind. An den Planetenradbolzen 28, 38, 48 ist jeweils ein Planetenrad 26, 36, 46 drehbar angeordnet. In jeder der Planetenstufen 20, 30, 40 kämmen die Planetenräder 26, 36 mit einem Sonnenrad 21, 31. In der dritten Planetenstufe 40 kämmen die Planetenräder 46 mit einer Sonnenwelle 41, die mit einer Verzahnung versehen ist und so funktional auch ein Sonnenrad ist. Die Sonnenräder 21, 31, bzw. die Sonnenwelle 41, die Planetenräder 26, 36, 46 und die Planetenträger 24, 34, 44 gehören zu den drehenden Komponenten 13 des Planetengetriebes 10. Die Planetenträger 24, 34, 44 und die Sonnenräder 21, 31, 41 drehen im Betrieb um eine Hauptdrehachse 15 des Planetengetriebes 10, wodurch Antriebsleistung 25 von einer Antriebsseite 17 unter Wandlung von Drehmoment und Drehzahl zu einer Abtriebsseite 19 transportiert wird. Die Antriebsleistung 25 wird über eine Nabe 23 zugeführt, die einstückig mit dem Planetenträger 24 der ersten Planetenstufe 20 ausgebildet ist.

Der Planetenträger 34 der zweiten Planetenstufe 30 weist eine Nabe 33 auf, die sich in Richtung der ersten Planetenstufe 20 erstreckt. Über eine Welle-Nabe-Verbindung 57 ist die Nabe 33 drehmomentübertragend mit dem Sonnenrad 21 der ersten Planetenstufe 20 verbunden. An einem Ende 39 der Nabe 33, das der zweiten Planetenstufe 30 abgewandt ist, und in FIG 1 links dargestellt ist, ist eine Abgabekomponente 52 einer Schmierstoffübergabevorrichtung 50 angeordnet. Die Schmierstoffübertragungsvorrichtung 50 umfasst auch eine Aufnahmekomponente 54, die mit der ersten Planetenstufe 20 verbunden ist. Die Aufnahmekomponente 54 ist am Planetenträger 24 der ersten Planetenstufe 20 angebracht. Die Aufnahmekomponente 54 ist dabei im Bereich einer Wange 27 des Planetenträgers 24 befestigt, so dass Schmierstoff 55 von der Abgabekomponente 52 in die Aufnahmekomponente 54 übertragbar ist. Der Schmierstoff 55 wird dabei entlang einer Fließrichtung 53 gefördert. Dadurch, dass die Abgabekomponente 52 am Planetenträger 34 der zweiten Planetenstufe 30 befestigt ist, dreht sich diese im Betrieb mit dem Planetenträger 34 mit. Analog dreht sich die Aufnahmekomponente 54 mit dem Planetenträger 24 der ersten Planetenstufe 20 mit. Aufgrund der unterschiedlichen Drehzahlen des Planetenträgers 24 und des Sonnenrads 21 der ersten Planetenstufe 20, liegt auch zwischen der Aufnahmekomponente 54 und der Abgabekomponente 52 eine Relativdrehung 59 vor. Die Schmierstoffübergabevorrichtung 50 verfügt über Dichtungen 51, die als Dichtringe ausgebildet sind und ist dadurch dazu geeignet, den Schmierstoff 55 auch bei Vorliegen der Relativdrehung 59 bei minimalem Leckageverlust zu übertragen. Der Schmierstoff 55 wird in Axialrichtung 45 durch einen Schmierstoffkanal 58 gefördert, der im Wesentlichen als Bohrung durch die Nabe 33 des Planetenträger 34 der zweiten Planetenstufe 30 ausgebildet ist. Durch die Abgabekomponente 52 und die Aufnahmekomponente 54 wird der Schmierstoff 55 umgelenkt und über einen Schmierstoffkanal 58 im Planetenträger 24 der ersten Planetenstufe 20 zu einem darin aufgenommenen Planetenradbolzen 28 transportiert. Dadurch ist der Schmierstoff 55 einer Gleitlagerung zwischen dem Planetenradbolzen 28 und dem Planetenrad 26 in der ersten Planetenstufe 20 zuführbar. Der Schmierstoffkanal 58, der hydraulisch mit der Aufnahmekomponente 54 verbunden ist, ist im Wesentlichen als Bohrung in Radialrichtung 49 ausgebildet, die sich durch die Wange 27 des Planetenträgers 24 auf der Antriebsseite 17 erstreckt.

Der Schmierstoffkanal 58, der in der Nabe 33 des Planetenträger 34 der zweiten Planetenstufe 30 ausgebildet ist, erstreckt sich, entlang der Axialrichtung 45 betrachtet, durch einen Zahneingriffsbereich 56, in dem Verzahnungen 29 der Planetenräder 26 und des Sonnenrads 21 der ersten Planetenstufe 20 ineinandergreifen. Innerhalb des Zahneingriffsbereich 56 liegt auch ein Bereich, in dem die Welle-Nabe-Verbindung 57 zwischen dem Sonnenrad 21 der ersten Planetenstufe 20 mit dem Planetenträger 34 der zweiten Planetenstufe 20 verbunden ist. Durch die Verwendung der Schmierstoffübergabevorrichtung 50 weist der Planetenträger 24 der ersten Planetenstufe 20 einen erhöhten Innendurchmesser 16 auf, in dem ein Pitch-Rohr 18 angeordnet ist. Dadurch ist die erste Planetenstufe 20 in einfacher Weise zugänglich, was eine Montage und Wartungsarbeiten vereinfacht. Darüber hinaus ist die Schmierstoffübergabevorrichtung 50 dazu geeignet, einen axialen Versatz, einen radialen Versatz, und/oder einen Winkelversatz zwischen den Planetenträgern 24, 34 der ersten und zweiten Planetenstufe 20, 30 auszugleichen. Hierdurch ist das in FIG 1 gezeigte Planetengetriebe 10 robust gegen vorübergehend übermäßige Beanspruchungen und weist nur minimale Leckageverluste an Schmierstoff 55 an der Schmierstoffübergabevorrichtung 50 auf. Insgesamt wird der Transport von Schmierstoff 55 von der zweiten Planetenstufe 30 zur ersten Planetenstufe 20 auch dadurch vereinfacht, dass die Länge der Schmierstoffkanäle 58 im ersten und zweiten Planetenträger 24, 34 reduziert ist. Dadurch sind hydraulische Verluste in den Schmierstoffkanälen 58, also im Wesentlichen Druckverluste, reduzierbar, was wiederum die Verwendung einer einfachen Schmierstoffpumpe erlaubt, die in FIG 1 nicht näher gezeigt ist.

Das Planetengetriebe 10 in FIG 1 weist auch eine dritte Planetenstufe 40 auf, die mit einer Abgabekomponente 52 einer Schmierstoffübergabevorrichtung 50 versehen ist. Die korrespondierende Aufnahmekomponente 54 ist mitdrehend am Planetenträger 34 der zweiten Planetenstufe 30 angebracht. Die Schmierstoffübergabevorrichtung 50 zwischen der zweiten und dritten Planetenstufe 30, 40 ist korrespondieren zur Schmierstoffübergabevorrichtung 50 zwischen der ersten und zweiten Planetenstufe 20, 30 aufgebaut und angeordnet. Die oben skizzierten technischen Aspekte gelten deshalb genauso für die Schmierstoffvorrichtung 50 zwischen der zweiten und dritten Planetenstufe 30, 40. Das Planetengetriebe 10 ist ferner in einem Computerprogrammprodukt 90 simulationsfähig wiedergegeben, so dass das Betriebsverhalten des Planetengetriebes 10 rechnerisch nachstellbar ist.

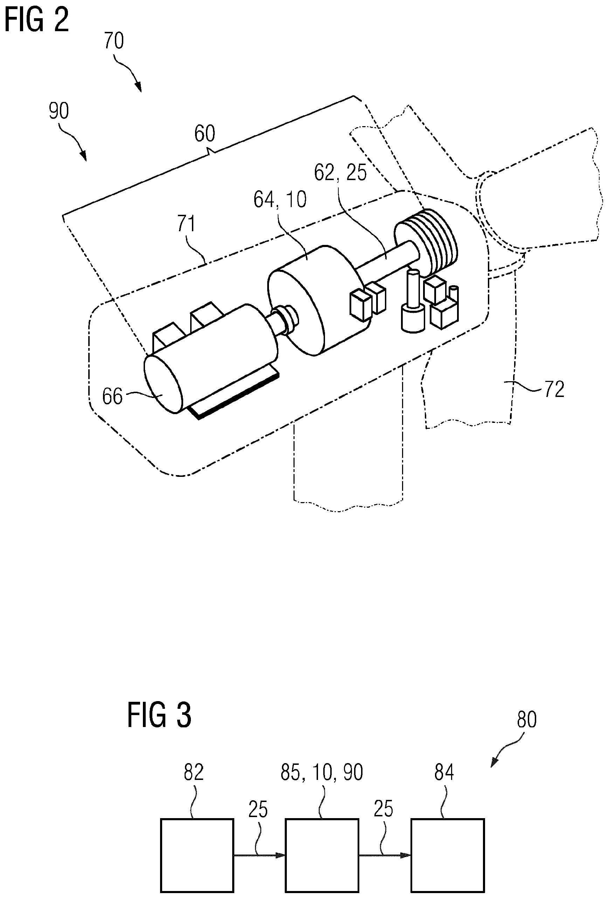

Eine Ausführungsform der beanspruchten Windkraftanlage 70 mit einem beanspruchten Antriebsstrang 60 ist in FIG 2 in einer geschnittenen Schrägansicht dargestellt. Der Antriebsstrang 60 ist ein einer Gondel 71 der Windkraftanlage 70 angeordnet und weist eine Rotorwelle 62 auf, die drehmomentübertragend mit dem Mehrblattrotor 72 verbunden ist. Eine Drehung des Mehrblattrotors 72 wird als Antriebsleistung 25 über die Rotorwelle 62 an ein Getriebe 64 übertragen, das wiederum drehmomentübertragend mit einem Generator 66 verbunden ist, die auch zum Antriebsstrang 60 gehören. Erfindungsgemäß ist das Getriebe 64 als ein Planetengetriebe 10 nach einer der oben beschriebenen Ausführungsformen ausgebildet. Ferner ist das Betriebsverhalten des Getriebes 64, also des Planetengetriebes 10, durch ein Computerprogrammprodukt 90 simulierbar. Das Computerprogrammprodukt 90 umfasst dazu ein Abbild des Planetengetriebes 10 und ist dazu geeignet, unter anderem eine Drehung des Mehrblattrotors 72 zu einer Nachbildung von Betriebsbedingungen der Windkraftanlage 70 zu verarbeiten.

FIG 3 zeigt schematisch den Aufbau einer Ausführungsform der beanspruchten Industrie-Applikation 80, die eine Antriebseinheit 82 und eine Abtriebseinheit 84 umfasst. Die Antriebseinheit 82 stellt eine Antriebsleistung 25 bereit, die über ein Getriebe 85 an die Abtriebseinheit 84 transportiert wird. Die Antriebseinheit 82 kann als Elektromotor, Verbrennungsmotor oder Hydraulikmotor ausgebildet sein. Die Abtriebseinheit 84 kann als mechanische Anwendung ausgebildet sein, so dass die Industrie-Applikation 80 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Erfindungsgemäß ist das Getriebe 85 als Planetengetriebe 10 nach einer der oben beschriebenen Ausführungsformen ausgebildet.

## Patentansprüche

1. Planetengetriebe (10), umfassend eine Schmierstoffübergabevorrichtung (50) zwischen einer ersten und einer zweiten Planetenstufe (20, 30), wobei die Schmierstoffübergabevorrichtung (50) eine mitdrehend an einer Komponente (13) der zweiten Planetenstufe (30) angeordnete Abgabekomponente (52) und eine mitdrehend an einer Komponente (13) der ersten Planetenstufe (20) angeordnete Aufnahmekomponente (54) für Schmierstoff (55) umfasst, und einen mit der Schmierstoffübergabevorrichtung (50) kommunizierenden Schmierstoffkanal (58), **dadurch gekennzeichnet, dass** der Schmierstoffkanal (58) über die gesamte axiale Erstreckung eines Zahneingriffsbereichs (56) eines Sonnenrads (21) der ersten Planetenstufe (21) radial innerhalb einer Verzahnung (29) des Sonnenrads (21) mit mindestens einem Planetenrad (26) der ersten Planetenstufe (21) verläuft.

2. Planetengetriebe (10) nach Anspruch 1, **dadurch gekennzeichnet, dass** der Schmierstoffkanal (58) innerhalb der Schmierstoffübergabevorrichtung (50) in Fließrichtung (53) zwischen einer axialen Fließrichtung und einer radialen Fließrichtung umgelenkt ist, wobei insbesondere der Schmierstoffkanal (58) in axialer Richtung in die Abgabekomponente (52) einmündet und in radialer Richtung aus der Aufnahmekomponente (54) austritt.

3. Planetengetriebe (10) nach Anspruch 1 oder 2, **da**- **durch gekennzeichnet**, dass das Sonnenrad (21) an einer Nabe (33) eines Planetenträgers (34) der zweiten Planetenstufe (30) relativ drehbar oder drehfest vorgesehen ist, wobei der Schmierstoffkanal (58) innerhalb der Nabe (33) den Zahneingriffsbereichs (56) des Sonnenrads (21) passiert und die Schmierstoffübergabevorrichtung (50) stromabwärts der Nabe (33) positioniert ist.

4. Planetengetriebe (10) nach Anspruch 1 oder 2, **da**- **durch gekennzeichnet**, dass das Sonnenrad (21) mit einer Sonnenradwelle der ersten Planetenstufe drehfest befestigt ist, wobei der Schmierstoffkanal (58) innerhalb der Sonnenradwelle den Zahneingriffsbereichs (56) des Sonnenrads (21) passiert und die Schmierstoffübergabevorrichtung (50) stromaufwärts der Sonnenradwelle positioniert ist.

5. Planetengetriebe (10) nach einem der Ansprüche 1 bis 4,
**dadurch gekennzeichnet, dass** der Schmierstoffkanal (58) sowohl an einen im einem Planetenträger (24) drehbar oder drehfest eingesetzten Planetenradbolzen (28) der ersten Planetenstufe (20) als auch an einen im einem Planetenträger (34) drehbar oder drehfest eingesetzten Planetenradbolzen (38) der zweiten Planetenstufe (30) herangeführt ist, wobei insbesondere der Schmierstoffkanal (58) zu einem an dem Planetenradbolzen (28) der ersten Planetenstufe (20) vorgesehenen Planetenrad (22) der ersten Planetenstufe (20) an dem Planetenradbolzen (28) der ersten Planetenstufe (20) axial beabstandet endet und/oder der Schmierstoffkanal (58) zu einem an dem Planetenradbolzen (38) der zweiten Planetenstufe (30) vorgesehenen Planetenrad (32) der zweiten Planetenstufe (30) an dem Planetenradbolzen (38) der zweiten Planetenstufe (30) axial beabstandet endet.

6. Planetengetriebe (10) nach einem der Ansprüche 1 bis 5,
**dadurch gekennzeichnet, dass** die Aufnahmekomponente (54) an einer der zweiten Planetenstufe (30) abgewandten Wange (27) eines Planetenträgers (24) der ersten Planetenstufe (20) angeordnet ist.

7. Planetengetriebe (10) nach einem der Ansprüche 1 bis 6,
**dadurch gekennzeichnet, dass** die Schmierstoffübergabevorrichtung (50) zum Ausgleichen eines radialen, eines axialen Versatzes und/oder Winkelversatzes zwischen der Abgabekomponente (52) und der Aufnahmekomponente (54) ausgebildet ist.

8. Planetengetriebe (10) nach einem der Ansprüche 1 bis 7,
**dadurch gekennzeichnet, dass** die Schmierstoffübergabevorrichtung (50) eine Labyrinthdichtung, eine Buchse und/oder einen Dichtring (51) aufweist.

9. Planetengetriebe (10) nach einem der Ansprüche 1 bis 8,
**dadurch gekennzeichnet, dass** zwischen der Abgabekomponente (52) und der Aufnahmekomponente (54) ein Spalt ausgebildet ist.

10. Planetengetriebe (10) nach einem der Ansprüche 1 bis 9,
**dadurch gekennzeichnet, dass** zwischen der Abgabekomponente (52) und der Aufnahmekomponente (54) eine Fliehkraftdichtung angeordnet ist.

11. Planetengetriebe (10) nach einem der Ansprüche 1 bis 10,
**dadurch gekennzeichnet, dass** das Planetengetriebe (10) auch eine dritte Planetenstufe (40) aufweist.

12. Antriebsstrang (60) für eine Windkraftanlage (70), umfassend eine Rotorwelle (62), die drehmomentübertragend mit einem Getriebe (64) verbunden ist, und einen mit dem Getriebe (64) drehmomentübertragend verbundenen Generator (66), **da durch gekennzeichnet**, dass das Getriebe (64) als Planetengetriebe (10) nach einem der Ansprüche 1 bis 11 ausgebildet ist.

13. Windkraftanlage (70), umfassend eine Gondel (71), an der drehbar ein Mehrblattrotor (72) angeordnet ist, der mit einem Antriebsstrang (60) drehmomentübertragend verbunden ist,
**dadurch gekennzeichnet, dass** der Antriebsstrang (60) nach Anspruch 12 ausgebildet ist.

14. Industrie-Applikation (80), umfassend eine Antriebseinheit (82) und eine Abtriebseinheit (84), die über ein Getriebe (85) drehmomentübertragend miteinander verbunden sind,
**dadurch gekennzeichnet, dass** das Getriebe (85) als Planetengetriebe (10) nach einem der Ansprüche 1 bis 11 ausgebildet ist.

## Claims

1. Planetary transmission (10), comprising a lubricant transfer apparatus (50) between a first and a second planetary stage (20, 30), the lubricant transfer apparatus (50) comprising an output component (52), arranged so as to corotate on a component (13) of the second planetary stage (30), and a receiving component (54) for lubricant (55), arranged so as to corotate on a component (13) of the first planetary stage (20), and a lubricant channel (58) which communicates with the lubricant transfer apparatus (50), **characterized in that** the lubricant channel (58) runs over the entire axial extent of a tooth engagement region (56) of a sun gear (21) of the first planetary stage (21) radially within a toothing system (29) of the sun gear (21) with at least one planetary gear (26) of the first planetary stage (21) .

2. Planetary transmission (10) according to Claim 1, **characterized in that** the lubricant channel (58) is deflected within the lubricant transfer apparatus (50) in the flow direction (53) between an axial flow direction and a radial flow direction, the lubricant channel (58) opening, in particular, in the axial direction into the output component (52) and exiting in the radial direction from the receiving component (54).

3. Planetary transmission (10) according to Claim 1 or 2, **characterized in that** the sun gear (21) is provided in a manner which is relatively rotatable or fixed for conjoint rotation on a hub (33) of a planetary carrier (34) of the second planetary stage (30), the lubricant channel (58) passing the tooth engagement region (56) of the sun gear (21) within the hub (33), and the lubricant transfer apparatus (50) being positioned downstream of the hub (33).

4. Planetary transmission (10) according to Claim 1 or 2, **characterized in that** the sun gear (21) is fastened fixedly to a sun gear shaft of the first planetary stage for conjoint rotation, the lubricant channel (58) passing the tooth engagement region (56) of the sun gear (21) within the sun gear shaft, and the lubricant transfer apparatus (50) being positioned upstream of the sun gear shaft.

5. Planetary transmission (10) according to one of Claims 1 to 4, **characterized in that** the lubricant channel (58) is routed both up to a planetary gear pin (28), inserted in a planetary carrier (24) in a manner which is rotatable or fixed for conjoint rotation, of the first planetary stage (20) and on a planetary gear pin (38), inserted into a planetary carrier (34) in a manner which is rotatable or fixed for conjoint rotation, of the second planetary stage (30), the lubricant channel (58) ending, in particular, spaced axially apart from a planetary gear (22), provided on the planetary gear pin (28) of the first planetary stage (20), of the first planetary stage (20) on the planetary gear pin (28) of the first planetary stage (20), and/or the lubricant channel (58) ending spaced apart axially from a planetary gear (32), provided on the planetary gear pin (38) of the second planetary stage (30), of the second planetary stage (30) on the planetary gear pin (38) of the second planetary stage (30).

6. Planetary transmission (10) according to one of Claims 1 to 5, **characterized in that** the receiving component (54) is arranged on a web (27), facing away from the second planetary stage (30), of a planetary carrier (24) of the first planetary stage (20).

7. Planetary transmission (10) according to one of Claims 1 to 6, **characterized in that** the lubricant transfer apparatus (50) is configured to compensate for a radial offset, an axial offset and/or an angular offset between the output component (52) and the receiving component (54).

8. Planetary transmission (10) according to one of Claims 1 to 7, **characterized in that** the lubricant transfer apparatus (50) has a labyrinth seal, a bushing and/or a sealing ring (51).

9. Planetary transmission (10) according to one of Claims 1 to 8, **characterized in that** a gap is configured between the output component (52) and the receiving component (54).

10. Planetary transmission (10) according to one of Claims 1 to 9, **characterized in that** a centrifugal seal is arranged between the output component (52) and the receiving component (54).

11. Planetary transmission (10) according to one of Claims 1 to 10, **characterized in that** the planetary transmission (10) also has a third planetary stage (40).

12. Drive train (60) for a wind power plant (70), comprising a rotor shaft (62) which is connected in a torque-transmitting manner to a transmission (64), and a generator (66) which is connected in a torque-transmitting manner to the transmission (64), **characterized in that** the transmission (64) is configured as a planetary transmission (10) according to one of Claims 1 to 11.

13. Wind power plant (70), comprising a nacelle (71), on which a multiple-blade rotor (72) is arranged rotatably which is connected in a torque-transmitting manner to a drive train (60), **characterized in that** the drive train (60) is configured according to Claim 12.

14. Industrial application (80), comprising a drive unit (82) and an output unit (84) which are connected to one another in a torque-transmitting manner via a transmission (85), **characterized in that** the transmission (85) is configured as a planetary transmission (10) according to one of Claims 1 to 11.

## Revendications

1. Engrenage planétaire (10), comprenant un dispositif de transfert de lubrifiant (50) entre un premier et un deuxième étage planétaire (20, 30), le dispositif de transfert de lubrifiant (50) comprenant un composant de distribution (52) agencé de manière à tourner avec un composant (13) du deuxième étage planétaire (30) et un composant de réception (54) pour le lubrifiant (55) agencé de manière à tourner avec un composant (13) du premier étage planétaire (20), et un canal de lubrification (58) communiquant avec le dispositif de transfert de lubrifiant (50), **caractérisé en ce que** le canal de lubrification (58) s'étend sur toute l'étendue axiale d'une zone d'engrènement (56) d'une roue solaire (21) du premier étage planétaire (21), radialement à l'intérieur d'une denture (29) de la roue solaire (21) avec au moins un satellite (26) du premier étage planétaire (21) .

2. Engrenage planétaire (10) selon la revendication 1, **caractérisé en ce que** le canal de lubrification (58) à l'intérieur du dispositif de transfert de lubrifiant (50) est dévié dans la direction d'écoulement (53) entre une direction d'écoulement axiale et une direction d'écoulement radiale, le canal de lubrification (58) débouchant notamment dans la direction axiale dans le composant de distribution (52) et sortant dans la direction radiale du composant de réception (54).

3. Engrenage planétaire (10) selon la revendication 1 ou 2, **caractérisé en ce que** la roue solaire (21) est prévue de manière relativement rotative ou de manière solidaire en rotation sur un moyeu (33) d'un porte-satellites (34) du deuxième étage planétaire (30), le canal de lubrification (58) passant à l'intérieur du moyeu (33) par la zone d'engrènement (56) de la roue solaire (21) et le dispositif de transfert de lubrifiant (50) étant positionné en aval du moyeu (33).

4. Engrenage planétaire (10) selon la revendication 1 ou 2, **caractérisé en ce que** la roue solaire (21) est fixée de manière solidaire en rotation à un arbre de roue solaire du premier étage planétaire, le canal de lubrification (58) passant à l'intérieur de l'arbre de roue solaire par la zone d'engrènement (56) de la roue solaire (21) et le dispositif de transfert de lubrifiant (50) étant positionné en amont de l'arbre de roue solaire.

5. Engrenage planétaire (10) selon l'une quelconque des revendications 1 à 4, **caractérisé en ce que** le canal de lubrifiant (58) est approché à la fois d'un axe de satellite (28) du premier étage planétaire (20), inséré de manière rotative ou de manière solidaire en rotation dans un porte-satellites (24), et d'un axe de satellite (38) du deuxième étage planétaire (30), inséré de manière rotative ou de manière solidaire en rotation dans un porte-satellites (34), le canal de lubrifiant (58) se terminant notamment à une distance axiale de l'axe de satellite (28) du premier étage planétaire (20) par rapport à un satellite (22) du premier étage planétaire (20) prévu sur l'axe de satellite (28) du premier étage planétaire (20) et/ou le canal de lubrifiant (58) se terminant à une distance axiale de l'axe de satellite (38) du deuxième étage planétaire (30) par rapport à un satellite (32) du deuxième étage planétaire (30) prévu sur l'axe de satellite (38) du deuxième étage planétaire (30) .

6. Engrenage planétaire (10) selon l'une quelconque des revendications 1 à 5, **caractérisé en ce que** le composant de réception (54) est agencé sur une joue (27), détournée du deuxième étage planétaire (30), d'un porte-satellites (24) du premier étage planétaire (20).

7. Engrenage planétaire (10) selon l'une quelconque des revendications 1 à 6, **caractérisé en ce que** le dispositif de transfert de lubrifiant (50) est configuré pour compenser un décalage radial, un décalage axial et/ou un décalage angulaire entre le composant de distribution (52) et le composant de réception (54).

8. Engrenage planétaire (10) selon l'une quelconque des revendications 1 à 7, **caractérisé en ce que** le dispositif de transfert de lubrifiant (50) présente un joint labyrinthe, une douille et/ou une bague d'étanchéité (51) .

9. Engrenage planétaire (10) selon l'une quelconque des revendications 1 à 8, **caractérisé en ce qu'**un espace est formé entre le composant de distribution (52) et le composant de réception (54).

10. Engrenage planétaire (10) selon l'une quelconque des revendications 1 à 9, **caractérisé en ce qu'**un joint centrifuge est agencé entre le composant de distribution (52) et le composant de réception (54).

11. Engrenage planétaire (10) selon l'une quelconque des revendications 1 à 10, **caractérisé en ce que** l'engrenage planétaire (10) présente également un troisième étage planétaire (40).

12. Chaîne cinématique (60) pour une éolienne (70), comprenant un arbre de rotor (62) qui est relié à un engrenage (64) de manière à transmettre le couple, et une génératrice (66) reliée à l'engrenage (64) de manière à transmettre le couple, **caractérisée en ce que** l'engrenage (64) est configuré sous forme d'engrenage planétaire (10) selon l'une quelconque des revendications 1 à 11.

13. Éolienne (70), comprenant une nacelle (71) sur laquelle est agencé de manière rotative un rotor multipale (72), qui est relié à une chaîne cinématique (60) de manière à transmettre le couple, **caractérisée en ce que** la chaîne cinématique (60) est configurée selon la revendication 12.

14. Application industrielle (80), comprenant une unité d'entraînement (82) et une unité de sortie (84), qui sont reliées l'une à l'autre par l'intermédiaire d'un engrenage (85) de manière à transmettre le couple, **caractérisée en ce que** l'engrenage (85) est configuré sous forme d'engrenage planétaire (10) selon l'une quelconque des revendications 1 à 11.
